Europäisches Patentamt

European Patent Office

Office européen des brevets

(19)

(11) EP 0 835 559 B1

(12) FASCICULE DE BREVET EUROPEEN

(45) Date de publication et mention
de la délivrance du brevet:
**28.01.2004 Bulletin 2004/05**

(51) Int Cl.⁷: **H04B 10/155**, H03F 1/32

(86) Numéro de dépôt international:
**PCT/FR1996/001755**

(21) Numéro de dépôt: **96938272.0**

(22) Date de dépôt: **07.11.1996**

(87) Numéro de publication internationale:
**WO 1997/017773 (15.05.1997 Gazette 1997/21)**

(54) **PROCEDE ET DISPOSITIF D'ESTIMATION DE NON-LINEARITE**

VERFAHREN UND VORRICHTUNG ZUR SCHÄTZUNG VON NICHTLINEARITÄT

NON-LINEARITY ESTIMATION METHOD AND DEVICE

(84) Etats contractants désignés:
**DE FR GB**

(30) Priorité: **09.11.1995 FR 9513282**

(43) Date de publication de la demande:
**15.04.1998 Bulletin 1998/16**

(73) Titulaire: **THOMSON BROADCAST SYSTEMS
95801 Cergy-Pontoise Cedex (FR)**

(72) Inventeurs:
• **HERGAULT, Stéphane
F-92050 Paris-La Défense Cédex (FR)**
• **HARDY, Patrick
F-92050 Paris-La Défense Cédex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 407 919            US-A- 5 323 119**

• **FREQUENZ, vol. 38, no. 9, Septembre 1984,
BERLIN DE, pages 206-212, XP002010054
BERTELSMEIER ET AL: "Linearization of
broadband optical transmission systems by
adaptive predistortion"**
• **JOURNAL OF LIGHTWAVE TECHNOLOGY, vol.
11, no. 1, Janvier 1993, NEW YORK US, pages
82-104, XP000377989 NAZARATHY ET AL:
"Progress in externally modulated AM CATV
transmission systems"**

## Description

L'invention concerne les circuits non-linéaires et plus particulièrement les dispositifs de correction de linéarité de tels circuits.

Elle s'applique par exemple aux circuits de modulation d'un signal optique provenant d'un laser pour la transmission de signaux sur fibre optique. Cette modulation, réalisée à l'aide d'un modulateur externe branché en sortie du laser, est source de non-linéarité.

Les systèmes de transmission d'un signal sont généralement sensibles à la non-linéarité des différents éléments qui les constituent. Si la non-linéarité de ces éléments est imposée par la physique, il reste malgré tout possible d'ajouter des dispositifs de linéarisation afin d'améliorer les performances globales du système. On doit dans ce cas disposer d'un moyen de mesure des non-linéarités résiduelles du système à corriger pour pouvoir optimiser les paramètres du dispositif de linéarisation. Si de plus les non-linéarités du système sont appelées à évoluer dans le temps, le dispositif de mesure doit être intégré au système pour réagir en temps réel sur les dispositifs de linéarisation.

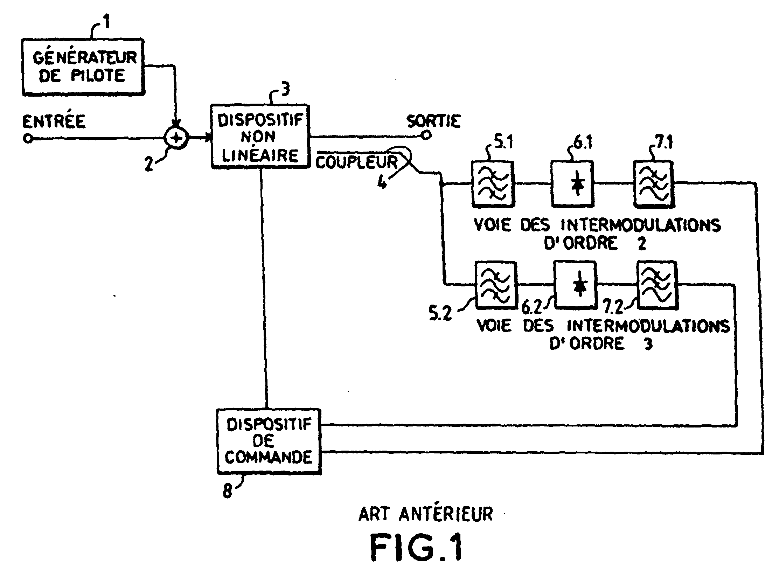

Un moyen connu d'estimation de la non-linéarité consiste en l'utilisation d'un ou plusieurs signaux pilotes. La figure 1 représente un tel dispositif selon l'art antérieur.

Le signal pilote, le plus souvent sinusoïdal, est généré par un oscillateur ou générateur de pilote 1. Ce signal est envoyé sur une deuxième entrée d'un additionneur 2 dont la première entrée est alimentée par le signal à transmettre ou signal utile. Le dispositif non-linéaire dont on cherche à corriger les effets gênants dus à la non-linéarité est branché en aval du générateur de fréquence pilote, par exemple en sortie de l'additionneur 2. Un coupleur 4 est branché en sortie du dispositif non-linéaire pour prélever, sur sa sortie couplée, les intermodulations créées par ce dernier. La sortie directe du coupleur fournit le signal à exploiter, qui sera éventuellement filtré pour être débarrassé du signal pilote précédemment ajouté. Le signal prélevé sur la sortie couplée est transmis à l'entrée d'une voie de mesure des signaux d'intermodulation de deuxième ordre ou de plusieurs voies de mesure de signaux d'intermodulation d'ordres successifs, par exemple deux voies sur le schéma. Chacune des voies est constituée d'un premier filtre passe-bande 5.1, 5.2, qui a pour rôle de sélectionner l'harmonique dont la fréquence correspond à l'ordre d'intermodulation de la voie, suivi d'un détecteur 6.1, 6.2, qui mesure l'amplitude ou la puissance du signal filtré. Le détecteur peut être une simple diode ou un dispositif associant une résistance et une mesure de température tel qu'un bolomètre. La sortie du détecteur est reliée à un filtre passe-bas 7.1, 7.2, qui élimine les fréquences parasites. La sortie de chacune des voies (ou de la voie de mesure dans le cas ou elle est unique) est reliée à un dispositif de commande 8, lui même relié au dispositif non-linéaire. Ce dispositif de commande transforme les signaux reçus en signaux de commande adaptés aux entrées de correction de non-linéarité du dispositif non-linéaire.

Les dispositifs de ce type souffrent d'inconvénients majeurs. Ils ne peuvent pas donner d'informations sur la phase des intermodulations et ils sont peu sensibles, en particulier lorsque le dispositif travaille en présence de bruit. Ils ne conviennent pas si les niveaux des produits d'intermodulation, c'est à dire les non-linéarités à mesurer sont très faibles.

Une amélioration de cette sensibilité, pour des dispositifs de ce type, se heurte à un coût prohibitif. En effet, un filtrage efficace des produits d'intermodulation nécessiterait non seulement l'utilisation de filtres de bruit 5.1, 5.2 de haute performance, donc de réalisation délicate, mais également d'un signal pilote parfaitement stable en fréquence.

L'article de JOURNAL OF LIGHTWAVE TECHNOLOGY, vol.11, n°1, janvier 1993, NEW YORK US, pages 82-104, NAZARATHY et Al., intitulé « Progress in extemally modulated AM CATV transmission systems », dévoile un dispositif d'estimation de non-linéarité pour un dispositif de transmission optique. L'article montre l'utilisation de signaux pilotes en combinaison avec un circuit de détection synchrone. Cependant, le dispositif d'estimation doit être placé à proximité du modulateur afin d'utiliser les mêmes signaux pilotes et ne permet pas d'être déporté à une longue distance de manière aisée.

La présente invention a pour but de pallier les inconvénients précités. Elle a pour objet un procédé d'estimation de non-linéarité d'un dispositif consistant à générer un ou plusieurs signaux pilotes en amont du dispositif pour la mesure de composantes de leurs produits d'intermodulation en sortie de ce dispositif. L'invention se caractérise plus particulièrement comme indiqué dans les revendications annexées.

Elle a pour avantage de permettre une correction plus rapide du dispositif non-linéaire du fait de l'information de phase. La sensibilité du dispositif d'estimation est améliorée et le coût est réduit du fait de l'utilisation de filtres standards et de contraintes réduites sur les signaux pilotes.

Les caractéristiques et avantages de la présente invention ressortiront mieux de la description suivante donnée à titre d'exemple non limitatif et en référence aux figures annexées où :

- La figure 1 représente un dispositif de mesure de non-linéarité selon l'art antérieur.
- La figure 2 représente, dans son principe, un dispositif de mesure de non-linéarité selon l'invention.
- La figure 3 représente une variante de ce dispositif.
- La figure 4 représente un dispositif de mesure de non linéarité prenant en compte des produits d'intermodulation du 2ème et 3ème ordre.
- La figure 5 représente un 1er exemple de réalisation.

- La figure 6 représente un 2ème exemple de réalisation.
- La figure 7 représente une application du dispositif de mesure de non-linéarité.

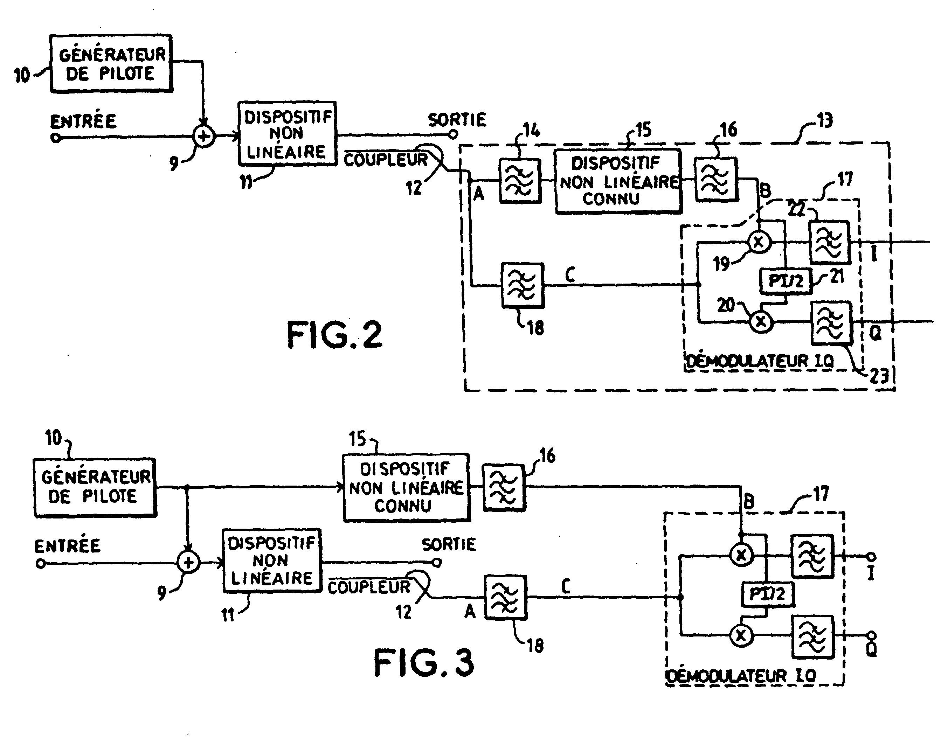

Le dispositif selon l'invention est représenté à la figure 2. Il utilise, comme les dispositifs connus, un signal pilote injecté en amont du dispositif non-linéaire à mesurer. Le signal utile devant alimenter le dispositif non-linéaire est préalablement transmis à une première entrée d'un additionneur 9. La deuxième entrée est, comme précédemment décrit, alimentée par un générateur de pilote 10 qui génère un signal, par exemple sinusoïdal, de fréquence comprise dans la bande passante du dispositif non-linéaire. La sortie de l'additionneur est reliée à l'entrée du dispositif non-linéaire 11 dont on cherche à corriger la non-linéarité. La sortie du dispositif non-linéaire est reliée à un coupleur 12 dont la voie directe fournit le signal utile. Ce signal est ensuite éventuellement filtré par les circuits aval pour en éliminer le signal pilote si nécessaire.

La sortie couplée est reliée à un dispositif de mesure proprement dit 13 représenté en traits pointillés sur le schéma. Ce dispositif réalise la détection des non-linéarités d'une manière nouvelle.

Le signal transmis par la voie couplée alimente un premier filtre passe-bande 14 qui a pour rôle de sélectionner par filtrage le signal pilote. Sa sortie est reliée à l'entrée d'un dispositif non-linéaire connu 15, c'est à dire dont on connaît les caractéristiques non-linéaires, par exemple les coefficients de sa fonction de transfert. Ce dispositif génère des signaux d'intermodulation à la même fréquence que ceux générés par le dispositif non linéaire 11. Le signal d'intermodulation d'ordre 2 est extrait du signal disponible en sortie grâce à un filtre passe-bande 16 branché en sortie du dispositif. Il est ensuite transmis sur l'entrée modulation d'un circuit de détection synchrone à deux voies en quadrature 17 représenté en pointillés sur le schéma.

Le signal transmis par la voie couplée alimente également un deuxième filtre passe-bande 18 qui a pour rôle de sélectionner par filtrage le signal d'intermodulation que l'on souhaite mesurer, c'est à dire celui d'ordre 2 provenant du dispositif non-linéaire 11. La sortie de ce filtre alimente, par l'entrée signal du circuit de détection synchrone 17, chacune des deux voies de ce circuit décrit ci-après.

Le circuit de détection synchrone est constitué de deux multiplieurs 19 et 20 dont chaque première entrée reçoit le signal provenant du filtre 18. La deuxième entrée est alimentée, pour le premier multiplieur 19 par le signal provenant du filtre 16 et pour le deuxième multiplieur 20 par ce signal déphasé de $\Pi/2$, ce signal traversant un circuit déphaseur 21 avant d'attaquer le multiplieur 20. Les sorties des multiplieurs 19 et 20 sont respectivement reliées aux filtres passe-bas 22 et 23 qui ont pour rôle de filtrer la seule composante continue. Les deux sorties correspondantes sont les sorties en quadrature I et Q du circuit de détection synchrone permettant de mesurer l'amplitude et la phase de l'intermodulation recherchée.

La détection synchrone permet de réduire considérablement la complexité des filtres. En effet le filtre passe-bande 18 de présélection de l'intermodulation n'a pas besoin d'être très sélectif, son rôle étant uniquement d'empêcher la saturation du circuit de détection synchrone par les signaux utiles et le signal pilote. La sélectivité est quant à elle procurée par les filtres passe-bas 22 et 23 placés à la sortie des détecteurs.

Soit $\omega_1$ la pulsation du signal pilote.

Le signal de modulation sur la 2ème entrée du circuit de détection synchrone est connu puisqu'il s'agit de l'harmonique 2 d'un signal pilote connu de pulsation $\omega_1$ délivrée par un dispositif non-linéaire de caractéristiques connues :

$$B = A_b.\cos(2\omega_1.t+\varphi_b),$$

$A_b$ et $\varphi_b$ étant les amplitudes et phases de l'harmonique 2 générée par le dispositif non-linéaire connu 15.

Le signal provenant du filtre 18 a pour valeur :

$$C = A_c.\cos(2\omega_1.t+\varphi_c),$$

$A_c$ et $\varphi_c$ étant les amplitudes et phases de l'harmonique 2 générée par le dispositif non-linéaire 11.

La composante continue du signal B x C correspondant à la sortie I a pour valeur :

$$I = BxC = \frac{1}{2}.A_b.A_c.\cos(\varphi_b-\varphi_c).$$

Celle correspondant à la sortie Q a pour valeur (déphasage du signal B de $\pi/2$) :

$$Q = \frac{1}{2}.A_b.A_c.\sin(\varphi_b-\varphi_c).$$

Ainsi, la mesure de l'amplitude de la composante continue de ces signaux permet de connaître la phase $\varphi_c$ et l'amplitude $A_c$ du signal d'intermodulation d'ordre 2 provenant du dispositif non-linéaire 11.

Ce dispositif peut évidemment être étendu aux mesures de signaux d'intermodulation d'ordres supérieurs, les filtres 16 et 18 étant adaptés en conséquence pour filtrer ces signaux.

La figure 3 représente une variante du dispositif précédemment décrit. Au lieu de regénérer le signal pilote transmis au dispositif non-linéaire connu en prélevant une partie du signal à la sortie du dispositif non-linéaire 11 et en le filtrant par l'intermédiaire du filtre 14, le signal provenant du générateur de pilote est ici directement transmis au dispositif non-linéaire connu 15.

La même numérotation est reprise pour les éléments identiques. Le générateur de pilote 10 est relié à la deuxième entrée de l'additionneur 9 et simultanément à l'entrée du dispositif non-linéaire connu 15. Le filtre 14 n'est ici plus nécessaire.

Ainsi, en résumé, le dispositif non-linéaire connu utilise le signal pilote soit en le prélevant avant injection dans le dispositif non-linéaire 11 soit en le regénérant à la sortie de celui-ci grâce à un coupleur 12 et à des filtres 14, cette dernière solution présentant l'avantage de dissocier le dispositif de mesure du dispositif d'injection des pilotes.

Les figures 2 et 3 montrent le principe de mesure de produits d'intermodulation liés à la génération d'une seule fréquence pilote, produits d'intermodulation correspondant aux harmoniques du signal pilote.

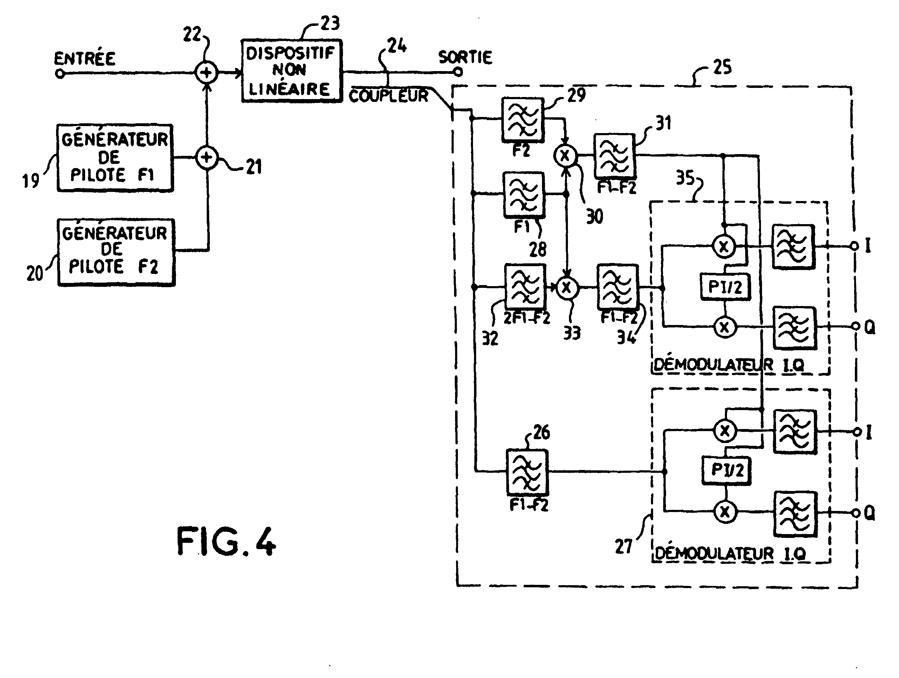

Il est cependant tout aussi envisageable et même plus avantageux, comme expliqué plus loin, de mesurer des produits d'intermodulation de plusieurs signaux pilotes en générant non pas une mais plusieurs fréquences pilotes. La figure 4 représente un dispositif pour de telles mesures.

Un 1er générateur de pilote 19 transmet sur une première entrée d'un additionneur 21 un signal de fréquence F1, un deuxième générateur de pilote 20 alimente la 2ème entrée de cet additionneur par un signal de fréquence F2. La sortie de l'additionneur est envoyée sur une deuxième entrée d'un deuxième additionneur 22 dont la 1ère entrée reçoit le signal utile. La sortie de l'additionneur est reliée à l'entrée du dispositif non-linéaire 23. La sortie de ce dispositif attaque un coupleur 24 dont la voie principale fournit le signal utile et dont la voie couplée fournit une partie de ce signal qui est exploitée par le dispositif de mesure de non-linéarité proprement dit 25 représenté en pointillés sur le schéma et décrit ci-après.

Ce dispositif, dans notre exemple, mesure l'intermodutation d'ordre deux à la fréquence F1-F2 et l'intermodulation d'ordre trois à la fréquence 2xF1-F2.

Pour ce faire, l'entrée du dispositif 25 est reliée à différents circuits le constituant et d'abord à un 1er filtre passe-bande 26 dont la fréquence centrale est F1-F2. Ce filtre transmet le signal correspondant à cette fréquence à l'entrée d'un circuit de démodulation synchrone 27 identique dans sa structure au circuit 17 décrit à la figure 2.

L'entrée du dispositif 25 est également reliée à l'entrée d'un filtre passe-bande 28 de fréquence centrale F1 et à l'entrée d'un filtre passe-bande 29 de fréquence centrale F2. Les sorties des filtres 28 et 29 sont respectivement reliées à une 1ère et à une 2ème entrée d'un multiplieur analogique 30. Ainsi, les signaux pilotes F1 et F2 restitués par les filtres sont mélangés pour générer, en sortie du multiplieur 30, des produits d'intermodulation. Un filtre 31, branché en sa sortie, de type passe-bande et centré sur la fréquence F1-F2, sélectionne le signal à cette fréquence pour le transmettre sur l'entrée modulation du circuit de détection synchrone 27.

Le dispositif non-linéaire de caractéristiques connues est ici le multiplieur 30. Les paramètres du signal utilisé pour détecter l'intermodulation d'ordre deux de fréquence F1-F2 sont donc connus. En d'autres termes, l'amplitude et la phase du signal de modulation F1-F2, connaissant les caractéristiques des signaux pilotes et des circuits non linéaires générant ce signal, sont connues.

La voie mesurant l'intermodulation d'ordre trois à la fréquence 2xF1-F2 est réalisée de manière originale, permettant d'utiliser un détecteur synchrone et un signal de modulation identiques à ceux de la voie d'ordre 2.

L'entrée du dispositif 25 est reliée à l'entrée d'un filtre passe-bande 32 de fréquence centrale 2F1-F2 et la sortie de ce filtre est reliée à une 1ère entrée d'un deuxième multiplieur 33. La deuxième entrée du multiplieur est branchée sur la sortie du filtre 28. La sortie du multiplieur est reliée à l'entrée d'un filtre passe-bande dont la fréquence centrale est F1-F2. C'est le signal en sortie de ce filtre qui alimente l'entrée signal d'un 2ème circuit de détection synchrone 35 identique au précédent. L'entrée modulation de ce circuit reçoit, comme pour le circuit 27, le signal en sortie du filtre 31.

Ainsi, l'intermodulation se trouvant à la fréquence 2xF1-F2 est transposée à la fréquence F1-F2 grâce à un 2ème multiplieur analogique de caractéristiques connues utilisant le pilote à la fréquence F1, cette intermodulation pouvant alors être traitée de la même façon que l'intermodulation d'ordre deux. La mesure de signal transposé F1-F2 permet de connaître la valeur de la composante 2xF1-F2, la relation entre ces signaux étant connue. Ce procédé est équivalent à une détection synchrone par un signal de fréquence 2xF1-F2.

La solution décrite dans cet exemple apporte de nombreux avantages du fait qu'elle permet une plus grande souplesse à la fois dans le choix des fréquences pilotes et des fréquences correspondant aux différents ordres des produits d'intermodulation. Dans les dispositifs précédemment décrits, il est nécessaire que la fréquence pilote et les produits d'intermodulation à mesurer se trouvent simultanément dans la bande passante du dispositif non-linéaire, ce qui n'est pas toujours réalisable.

Ici, il est possible de choisir des fréquences pilotes et des fréquences d'intermodulation se trouvant simultanément dans la bande passante du dispositif non-linéaire. Elles peuvent être choisies en dehors de la bande utile c'est à dire de la bande effectivement utilisée par le signal utile. Il est possible de générer des produits d'intermodulation à des fréquences basses. Ainsi, les fréquences des pilotes F1 et F2 peuvent être élevées mais choisissant ces fréquences pilote proches l'une de l'autre, la fréquence de l'intermodulation d'ordre deux qui se trouve à F1-F2 peut être relativement basse, ce qui rend les détecteurs simples à réaliser.

Il est d'autre part souhaitable que l'estimation de non-linéarité se fasse à des fréquences qui ne soient pas trop éloignées de celles correspondant aux produits d'intermodulation réels, c'est à dire dus au signal utile. La non-linéarité est en effet fonction de la fréquence et les coefficients $a_1$, $a_2$.... de la fonction de transfert liant la tension d'entrée $v_i$ du dispositif non-linéaire à sa tension de sortie

$$vs = a_0 v_i + a_1 v_i + a_2 v_i^2 + ...$$

sont des coefficients complexes.

Le fait de pouvoir choisir deux ou plusieurs points dans la bande passante du dispositif permet d'obtenir des coefficients représentatifs, en moyenne, des fréquences correspondant aux produits d'intermodulation réels.

Enfin, les niveaux des composantes correspondant à une combinaison des fréquences pilotes peuvent être plus élevés et donc plus faciles à mesurer que ceux correspondant aux harmoniques, le rapport d'amplitude étant de 2 ou 3 pour des composantes du 2ème ou du 3ème ordre et pour des amplitudes de pilote égales.

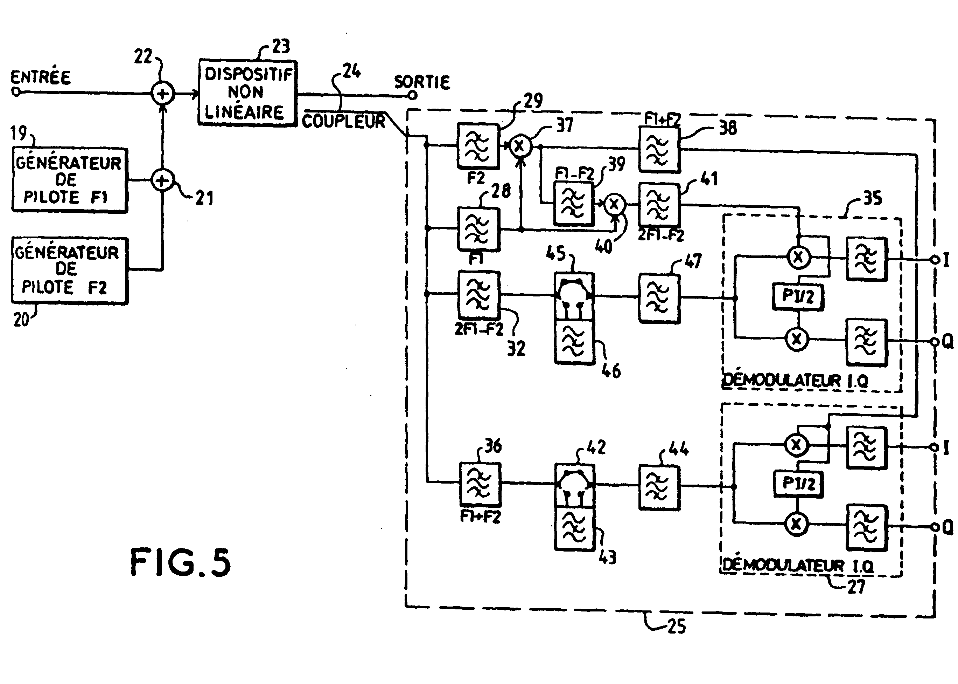

La figure 5 donne une première variante de réalisation du dispositif de mesure proprement dit 25 précédemment décrit. La numérotation de la figure 4 est reprise pour les éléments commun qui ne sont pas à nouveau décrits.

L'entrée du dispositif 25 est reliée en parallèle à différents circuits le constituant, à savoir aux entrées des filtres passe-bande 28, 29, 32, et à l'entrée d'un filtre passe-bande 36 qui est centré sur la fréquence F1+F2. C'est donc la composante d'ordre 2 à la fréquence F1+F2 et la composante d'ordre 3 à la fréquence 2xF1-F2 qui vont être mesurées.

L'élément non-linéaire connu est ici un comparateur à seuil associé à un circuit logique "OU exclusif", l'ensemble étant représenté sur la figure par un multiplieur 37 ou 40, le "OU exclusif" pouvant être assimilé à un multiplieur binaire. Les sorties des filtres 28 et 29 sont respectivement reliées à une 1ère entrée et à une 2ème entrée du circuit 37 qui réalise, par l'intermédiaire du comparateur à seuil, une "binarisation" de chacun de ces signaux puis, par l'intermédiaire du "OU exclusif", une multiplication de ces signaux binaires. On peut assimiler le comparateur à un générateur d'harmoniques et le multiplieur à un générateur de produits d'intermodulation. Ces nombreux produits d'intermodulation doivent donc être filtrés. Pour ce faire, la sortie du multiplieur est reliée à un 1er filtre 38 qui sélectionne le signal à la fréquence F1+F2, ensuite transmis sur l'entrée modulation du circuit de détection synchrone 27, ainsi qu'à un 2ème filtre 39 qui sélectionne le signal à la fréquence F1-F2. Le signal analogique en sortie de ce filtre 39 est envoyé sur l'entrée d'un second multiplieur 40 du même type que le précédent, la 2ème entrée étant alimentée par le signal en sortie du filtre 28. Parmi les produits d'intermodulation générés en sortie du multiplieur 40 se trouve donc le signal de fréquence 2xF1-F2, qui est sélectionné par un filtre passe-bande 41 centré sur cette fréquence. Il est ensuite transmis sur l'entrée modulation du circuit de détection synchrone 35.

Les détecteurs en quadrature utilisés produisent en général des signaux auxquels sont superposées des composantes continues. Or ces demi ères peuvent dans certains cas fausser la mesure. C'est pourquoi on utilise un filtre coupe-bande commutable qui, en éliminant l'intermodulation, permet d'identifier les décalages des composantes continues. On peut alors par calcul corriger les mesures (faites sans filtre coupe-bande) en retranchant les valeurs des composantes continues mesurées quand les filtres coupe-bande étaient sélectionnés.

Ainsi, la composante de 2ème ordre à la fréquence F1+F2 en sortie du filtre 36 traverse un commutateur 42 qui permet de brancher ou pas en série un filtre 43 réjecteur de la fréquence F1+F2. La sortie du commutateur est reliée à l'entrée d'un filtre passe-bande 44 de fréquence centrale F1+F2 et placé le plus en amont possible afin d'éliminer les signaux d'interférence captés sur la ligne. Ce filtre est identique ou même plus sélectif que le filtre 36. Son rôle est de filtrer le bruit de la chaîne d'amplification et des produits d'intermodulation intrinsèques à celle-ci, chaîne non représentée sur la figure 5 mais généralement nécessaire derrière les filtres de sélection des produits d'intermodulation. La sortie du filtre est reliée à l'entrée signal du circuit de démodulation synchrone 27.

De même pour la composante du 3ème ordre à la fréquence 2xF1-F2 en sortie du filtre 32 qui traverse un commutateur 45 permettant de brancher ou non en série un filtre 46 réjecteur de cette fréquence 2xF1-F2. En sortie du commutateur, le signal traverse un filtre passe-bande 47 à la fréquence centrale de 2xF1-F2 avant d'attaquer l'entrée signal du circuit de détection synchrone 35. Ce filtre 47 est, comme indiqué précédemment, un filtre de limitation du spectre de bruit.

Cette 1ère variante qui vient d'être décrite est principalement utilisée pour des fréquences basses. Par exemple, dans la réalisation effectuée :

$$F2=17 \text{ MHz}$$

$$F1=25.2 \text{ MHz}.$$

Ainsi, l'utilisation de filtres passe-bande sélectifs standards et de circuits logiques comme éléments non-linéaires conduit à un dispositif simplement réalisable et peu coûteux.

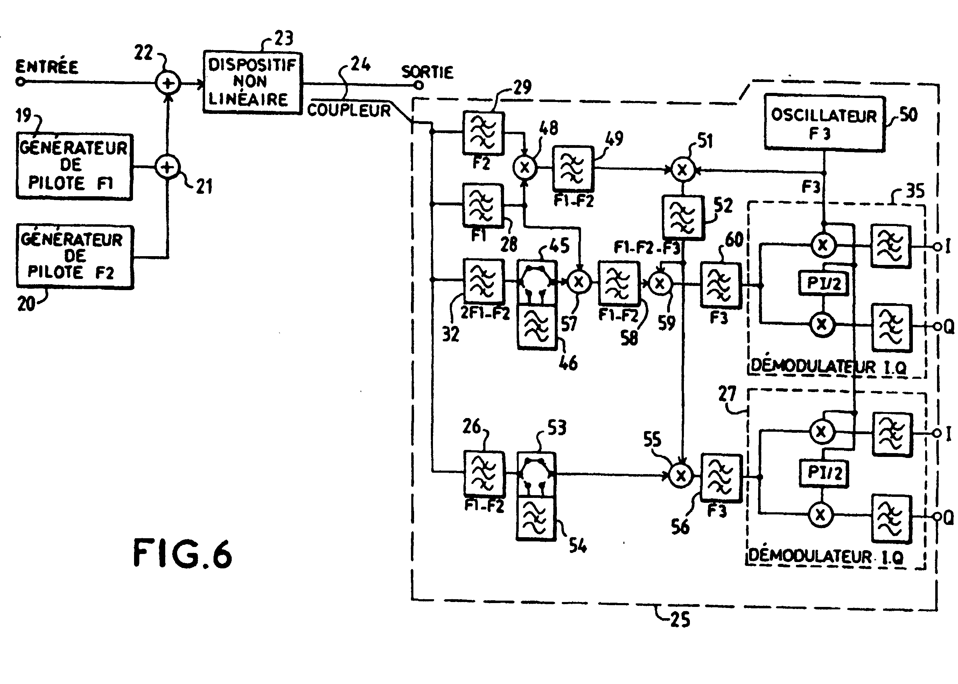

La deuxième variante de réalisation est représentée à la figure 6. Elle est plus adaptée aux fréquences élevées. Par exemple pour notre réalisation :

F2=438 MHz

F1=453MHz.

Elle utilise une transposition de fréquence supplémentaire qui permet de choisir la fréquence de fonctionnement des démodulations synchrones. On peut ainsi utiliser des filtres passe-bande standards donc de coût modeste, offrant une sélectivité élevée et une très bonne protection vis-à-vis du signal utile et du bruit. Les circuits de détection synchrone peuvent fonctionner à des fréquences relativement basses, malgré les hautes fréquences F1 et F2 souvent imposées par le dispositif non-linéaire. Les dispositifs non-linéaires connus sont ici non pas des circuits logiques mais des multiplieurs analogiques, les fréquences de fonctionnement étant plus élevées.

Contrairement au dispositif précédent, les composantes de produits d'intermodulation provenant d'un dispositif non-linéaire connu sont exploitées non pas pour moduler les circuits de détection synchrone mais pour transposer les produits d'intermodulation à mesurer à une fréquence unique F3, fréquence choisie pour le fonctionnement des circuits de détection synchrone.

Les filtres 28 et 29 permettent de récupérer les deux fréquences pilotes F1 et F2 ensuite transmises sur les deux entrées d'un multiplieur analogique 48. En sa sortie, le filtre passe-bande 49 extrait, des produits d'intermodutation délivrés par le multiplieur, le signal de fréquence F1-F2.

Un oscillateur 50 délivre un signal à une fréquence F3 qui est la fréquence de fonctionnement choisie pour les circuits de détection synchrone. Un multiplieur 51 permet de transposer la composante de 2ème ordre de fréquence F1-F2 à la fréquence F1-F2-F3. Pour cela, la sortie du filtre 49 est reliée à une 1 ère entrée du multiplieur et la sortie de l'oscillateur 50 est reliée à une 2ème entrée. Le signal transposé est filtré en sortie par l'intermédiaire d'un filtre passe-bande 52 centré sur F1-F2-F3.

La composante du 2ème ordre à mesurer F1-F2 est filtrée par le filtre passe-bande 26 puis traverse un commutateur 53 qui a pour rôle de permettre le branchement en série d'un filtre 54 réjecteur de la fréquence F1-F2 pour les raisons précédemment expliquées. Elle alimente ensuite un multiplieur analogique 55 sur une 1ère entrée, la 2ème entrée recevant le signal F1-F2-F3 provenant du filtre 52. Un filtre passe-bande 56 centré sur F3 est branché en sortie du multiplieur et fournit à l'entrée du circuit de détection synchrone 27 la composante du 2ème ordre à mesurer, transposée à la fréquence F3.

La composante du 3ème ordre à mesurer 2xF1-F2 est filtrée par le filtre passe-bande 32 puis traverse un commutateur 45 qui a pour rôle de permettre le branchement en série d'un filtre 46 réjecteur de la fréquence 2xF1-F2 pour les raisons précédemment expliquées. Elle alimente ensuite un multiplieur analogique 57 sur une 1ère entrée, la 2ème entrée recevant le signal à la fréquence F1 provenant du filtre 28. Un filtre passe-bande 58 centré sur F1-F2 est branché en sortie du multiplieur et sélectionne la composante 2xF1-F2 transposée à la fréquence F1-F2. La sortie du filtre 58 est reliée à la 1ère entrée d'un multiplieur analogique 59, la 2ème entrée étant branchée sur la sortie du filtre 52. Un filtre passe-bande 60 centré sur F3 est branché en sortie du multiplieur et fournit à l'entrée du circuit de détection synchrone 35, qui est identique au circuit 27, la composante du 3ème ordre à mesurer, transposée à la fréquence F3.

Les différentes transpositions se font à partir de dispositifs non-linéaires connus, les relations liant le signal à l'entrée d'un dispositif non-linéaire connu au signal transposé en sortie étant donc connues. Ainsi, connaître la valeur du signal 2xF1-F2 revient à mesurer le signal transposé F3.

Dans les deux variantes décrites, la dynamique du dispositif est liée à la largeur du filtre de présélection qui laisse passer une puissance de bruit proportionnelle à sa largeur de bande passante. Ce bruit peut avoir une puissance supérieure de 30 dB à la puissance de l'intermodulation recherchée et saturer les entrées des détecteurs en quadrature. Le choix judicieux des fréquences des pilotes permet l'utilisation de filtres à quartz ou de filtres céramiques standards, ce qui réduit le coût de réalisation du dispositif. Ainsi, les filtres F3 utilisés dans le dispositif de la figure 6 sont des filtres à quartz de type celui utilisé dans les circuits de fréquence intermédiaire des récepteurs FM, de fréquence centrale 10,7 MHz et de bande passante de l'ordre de 5 à 6 KHz.

Les fréquences des produits d'intermodulation sont choisies de manière à utiliser des circuits de détection synchrone fonctionnant à des fréquences relativement basses car d'un coût réduit et donnant une meilleure sensibilité. Ainsi, on choisira plutôt une différence de fréquences (F1-F2) plutôt qu'une somme (F1+F2) si les valeurs de F1 et F2 sont élevées.

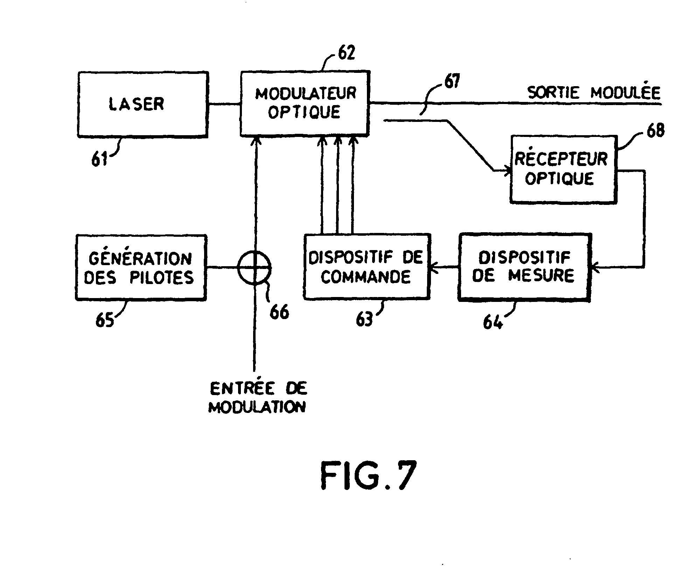

Une application particulière de l'invention précédemment décrite concerne un dispositif de transmission de signaux analogiques sur fibre optique, par exemple dans le cadre de la transmission de canaux de télévision. Le schéma d'intégration des circuits de détection et de correction de non-linéarité objets de l'invention est représenté sur la figure 7.

Il comprend une tête d'émission constituée d'un laser 61 associé à un modulateur optique externe 62. Ce dernier comporte un dispositif de linéarisation intégré qui peut être commandé par le biais de tensions de contrôle. Ces tensions sont appliquées au modulateur 62 par l'intermédiaire d'un dispositif de commande 63 qui utilise les mesures effectuées par un dispositif d'estimation de non-linéarité 64. Les fréquences pilotes sont générées par un générateur 65 pour être transmises à une première entrée d'un additionneur 66. La deuxième entrée de cet additionneur reçoit le signal de modulation "utile" du signal optique. La sortie de l'additionneur est reliée à l'entrée de modulation du modulateur optique 62. En sortie du modulateur est branché un coupleur optique 67 dont la sortie directe est la sortie modulée exploitée et dont la sortie couplée est reliée à un récepteur optique 68. Ce récepteur traduit le signal optique en signal électrique, signal transmis à l'entrée du dispositif de mesure 64. Ce dispositif de mesure est par exemple le dispositif 25. Le signal d'entrée est le signal optique modulé transformé en signal électrique et comportant donc les fréquences pilotes. La sortie de ce circuit se compose de paires de signaux I et Q dont le nombre correspond à celui des composantes mesurées par le dispositif 64, nombre fonction par exemple des entrées disponibles sur le dispositif non linéaire. L'ensemble des circuits récepteur optique 68, dispositif de mesure 64, dispositif de commande 63 représente la boucle d'asservissement.

## Revendications

1. Procédé d'estimation de non-linéarité d'un dispositif (11, 23, 62) consistant à générer un ou plusieurs signaux pilotes (10, 19, 20, 65) en amont du dispositif pour la mesure de composantes de leurs produits d'intermodulation en sortie de ce dispositif, où:

   - les signaux pilotes sont prélevés par filtrage (14, 28, 29) du signal de sortie du dispositif à mesurer (11, 23),
   - les signaux pilotes prélevés traversent au moins un dispositif non-linéaire connu (15, 30; 37, 40, 48) fournissant des produits d'intermodulation de caractéristiques connues,
   - au moins une des composantes des produits d'intermodulation connus est exploitée par au moins un circuit de détection synchrone (17, 27, 35) afin d'obtenir une mesure d'amplitude et de phase d'un produit d'intermodulation à mesurer.

2. Procédé selon la revendication 1, **caractérisé en ce que** la composante des produits d'intermodulation connus (F1-F2) est exploitée pour transposer au moins un produit d'intermodulation à mesurer (F1-F2) a une fréquence déterminée (F3) choisie comme fréquence de modulation du signal transposé (F3), modulation effectuée par des circuits de détection synchrone (27, 35).

3. Procédé selon la revendication 1, **caractérisé en ce que** la composante des produits d'intermodulation connus (F1-F2, F1+F2, 2F1-F2) est exploitée pour moduler au moins un signal relatif au produit d'intermodulation à mesurer.

4. Procédé selon la revendication 3, **caractérisé en ce que** la composante du produit d'intermodulation connu exploitée (F1-F2, F1+F2, 2xF1-F2) a la même fréquence que le signal relatif à la composante à mesurer et module directement le circuit de détection synchrone (27, 35).

5. Procédé selon la revendication 3, **caractérisé en ce qu'**un signal relatif à la composante à mesurer est cette composante à mesurer (2xF1-F2) transposée à la fréquence d'une autre composante à mesurer (F1-F2) à l'aide d'un 2ème dispositif non-linéaire connu (33).

6. Procédé selon la revendication 2, **caractérisé en ce que** l'exploitation (51) est une transposition du produit d'intermodulation (F1-F2) de la valeur correspondant à la fréquence déterminée (F3).

7. Procédé selon l'une des revendications précédentes, **caractérisé en ce que** les circuits de détection synchrone (17, 27, 35), sont des circuits à deux voies en quadrature.

8. Procédé selon l'une des revendications précédentes, **caractérisé en ce que** le dispositif non linéaire connu est constitué d'un comparateur à seuil suivi d'un multiplieur binaire (37, 40).

9. Procédé selon l'une des revendications précédentes, **caractérisé en ce qu'**un filtre réjecteur (43, 46, 54) à la fréquence du signal à mesurer par le circuit de détection synchrone (27, 35) est branché en entrée du circuit de détection synchrone (27,35) pour mesurer le signal continu non lié à la composante d'intermodulation.

10. Estimateur de non-linéarité d'un dispositif à mesurer (11, 23, 62) comprenant un générateur de signaux pilotes (10, 19, 20, 65), les signaux pilotes traversant le dispositif à mesurer, comportant :

    - au moins un moyen d'extraction (14, 28, 29) qui extrait les signaux pilotes à partir de la sortie du dispositif à mesurer,
    - un dispositif non-linéaire connu (15, 30, 37, 40, 48) recevant ces signaux pilotes provenant du moyen d'extraction (14, 28, 29) pour générer des produits d'intermodulation connus,
    - un circuit de détection synchrone (17, 27, 35) relié à une sortie du dispositif non-linéaire connu (15, 30, 37, 40, 48) et fournissant des signaux relatif à l'amplitude et à la phase d'un produit d'intermodutation à mesurer.

11. Estimateur selon la revendication 10, **caractérisé en ce que** :

- le circuit de détection synchrone (17, 27, 35) fonctionne à une fréquence de modulation déterminée (F3),
- le dispositif non-linéaire connu (55, 57, 59) transpose une composante des produits d'intermodulation à mesurer à une fréquence égale à celle du signal de modulation (F3) du circuit de détection synchrone (17, 27, 35), le signal transposé étant celui transmis à l'entrée du circuit de détection synchrone et le signal de transposition étant relatif aux signaux pilotes et de caractéristiques connues.

**12.** Estimateur selon la revendication 11, **caractérisé en ce que** le signal de transposition est réalisé à partir d'un deuxième dispositif non linéaire connu (51) recevant le signal de modulation (F3) du détecteur synchrone (27, 35) et recevant une composante d'un produit d'intermodulation connu provenant d'un dispositif non linéaire connu (48) alimenté par les signaux pilotes.

**13.** Estimateur selon la revendication 10, **caractérisé en ce que** le signal de modulation du circuit de détection synchrone (17, 27, 35) est une composante des produits d'intermodulation connus.

**Patentansprüche**

**1.** Verfahren zur Bewertung der Nichtlinearität einer Vorrichtung (11, 23, 62), das darin besteht, ein oder mehrere Pilotsignale (10, 19, 20, 65) stromaufwärts von der Vorrichtung zur Messung von Komponenten ihrer Intermodulationsprodukte am Ausgang dieser Vorrichtung zu erzeugen, wobei

- die Pilotsignale durch Filterung (14, 28, 29) des Ausgangssignals der zu messenden Vorrichtung (11, 23) entnommen werden,
- die aufgenommenen Pilotsignale zumindest eine bekannte nichtlineare Vorrichtung (15, 30; 37, 40, 48) durchlaufen, die Intermodulationsprodukte mit bekannten Eigenschaften liefert,
- zumindest eine der Komponenten der bekannten Intermodulationsprodukte durch zumindest eine Schaltung zur synchronen Detektion (17, 27, 35) ausgewertet wird, um eine Amplituden- und Phasenmessung eines zu messenden Intermodulationsprodukts zu erhalten.

**2.** Verfahren nach Anspruch 1, **dadurch gekennzeichnet, dass** die Komponente der bekannten Intermodulationsprodukte (F1-F2) ausgewertet wird, um zumindest ein zu messenden Intermodulationsprodukt (F1-F2) auf eine vorbestimmte Frequenz (F3) zu transponieren, die als Modulationsfrequenz des transponierten Signals (F3) gewählt wird, wobei die Modulation durch Schaltungen zur synchronen Detektion (27, 35) ausgeführt wird.

**3.** Verfahren nach Anspruch 1, **dadurch gekennzeichnet, dass** die Komponente der bekannten Intermodulationsprodukte (F1-F2, F1+F2, 2F1-F2) ausgewertet wird, um zumindest ein Signal bezüglich des zu messenden Intermodulationsprodukts zu modulieren.

**4.** Verfahren nach Anspruch 3, **dadurch gekennzeichnet, dass** die ausgewertete Komponente des bekannten Intermodulationsprodukts (F1-F2, F1+F2, 2xF1-F2) die gleiche Frequenz aufweist wie das Signal, das die zu messende Komponente aufweist und direkt die Schaltung zur synchronen Detektion (27, 35) moduliert.

**5.** Verfahren nach Anspruch 3, **dadurch gekennzeichnet, dass** die zu messende Komponente diese zu messende Komponente (2xF1-F2) ist, die auf die Frequenz einer anderen zu messenden Komponente (F1-F2) mittels einer zweiten bekannten nichtlinearen Vorrichtung (33) transponiert ist.

**6.** Verfahren nach Anspruch 2, **dadurch gekennzeichnet, dass** die Auswertung (51) eine Transponierung des Intermodulationsprodukts (F1-F2) von dem entsprechenden Wert auf die vorbestimmte Frequenz(F3) ist

**7.** Verfahren nach einem der vorhergehenden Ansprüche, **dadurch gekennzeichnet, dass** die Schaltungen zur synchronen Detektion (17, 27, 35) Schaltungen mit zwei um $\pi/2$ phasenverschobene Strekken sind.

**8.** Verfahren nach einem der vorhergehenden Ansprüche, **dadurch gekennzeichnet, dass** die bekannte nichtlineare Vorrichtung aus einem Grenzwertkomparator gefolgt von einem binären Multiplizierer (37, 40) besteht.

**9.** Verfahren nach einem der vorhergehenden Ansprüche, **dadurch gekennzeichnet, dass** ein Sperrfilter (43, 46, 54) bei der Frequenz des durch die Schaltung zur synchronen Detektion (27, 35) zu messenden Signals an den Eingang der Schaltung zur synchronen Detektion (27, 35) angeschlossen ist, um das Gleichstromsignal zu messen, das mit der Intermodulationskomponente verknüpft ist.

**10.** Bewertungsvorrichtung für die Nichtlinearität einer zu messenden Vorrichtung (11, 23, 62), mit einem Generator für Pilotsignale (10, 19, 20, 65), wobei die Pilotsignale die zu messende Vorrichtung durchlaufen, mit

- Mitteln zum Extrahieren (14, 28, 29), die die Pilotsignale auf der Basis des Ausgangssignals der zu messenden Vorrichtung extrahieren,
- eine bekannte nichtlineare Vorrichtung (15, 30; 37, 40, 48), die diese von den Mitteln zum Extrahieren (14, 28, 29) kommenden Pilotsignale empfängt, um bekannte Intermodulationsprodukte zu erzeugen,
- eine Schaltung zur synchronen Detektion (17, 27, 35), die mit einem Ausgang der bekannten nichtlinearen Vorrichtung (15, 30, 37, 40, 48) verbunden ist und Signale liefert, die mit der Amplitude und der Phase eines zu messenden Intermodulationsprodukts in Beziehung stehen.

11. Bewertungsvorrichtung nach Anspruch 10, **dadurch gekennzeichnet, dass**

- die Schaltung zur synchronen Detektion (17, 27, 35) bei einer bestimmten Modulationsfrequenz (F3) arbeitet,
- die bekannte nichtlineare Vorrichtung (55, 57, 59) eine Komponente der zu messenden Intermodulationsprodukte auf eine Frequenz transponiert, die gleich derjenigen des Modulationssignal (F3) der Schaltung zur synchronen Detektion (17, 27, 35) ist, wobei das transponierte Signal dasjenige ist, das zum Eingang der Schaltung zur synchronen Detektion übertragen wird und das Transpositionssignal in Beziehung zu den Pilotsignalen mit bekannten Eigenschaften ist.

12. Bewertungsvorrichtung nach Anspruch 11, **dadurch gekennzeichnet, dass** das Transponierungssignal auf der Basis einer zweiten bekannten nichtlinearen Schaltung (51) hergestellt wird, die das Modulationssignal (F3) des Synchrondetektors (27, 35) empfängt und eine Komponente eines bekannten Intermodulationsprodukts empfängt, das von einer bekannten nichtlinearen Schaltung (48) kommt, die durch die Pilotsignale gespeist wird.

13. Bewertungsvorrichtung nach Anspruch 10, **dadurch gekennzeichnet, dass** das Modulationssignal der Schaltung zur synchronen Detektion (17, 27, 35) eine Komponente der bekannten Intermodulationsprodukte ist.

**Claims**

1. Method of estimating nonlinearity of a device (11, 23, 62) consisting in generating one or more pilot signals (10, 19, 20, 65) upstream of the device for the measurement of components of their intermodulation products at the output of this device, where:

- the pilot signals are tapped off by filtering (14, 28, 29) from the output signal from the device to be measured (11, 23),
- the tapped off pilot signals pass through at least one known nonlinear device (15, 30; 37, 40, 48) providing intermodulation products of known characteristics,
- at least one of the components of the known intermodulation products are used by at least one synchronous detection circuit (17, 27, 35) to obtain a measurement of amplitude and of phase of an intermodulation product to be measured.

2. Method according to Claim 1, **characterized in that** the component of the known intermodulation product (F1-F2) is used to transpose at least one intermodulation product to be measured (F1-F2) has a specified frequency (F3) chosen as modulation frequency of the transposed signal (F3), modulation performed by synchronous detection circuits (27, 35).

3. Method according to Claim 1, **characterized in that** the component of the known intermodulation products (F1-F2, F1+F2, 2F1-F2) is used to modulate at least one signal relating to the intermodulation product to be measured.

4. Method according to Claim 3, **characterized in that** the used component of the known intermodulation product (F1-F2, F1+F2, 2 × F1-F2) has the same frequency as the signal relating to the component to be measured and modulates the synchronous detection circuit (27, 35) directly.

5. Method according to Claim 3, **characterized in that** a signal relating to the component to be measured is this component to be measured (2× F1-F2) transposed to the frequency of another component to be measured (F1-F2) with the aid of a 2nd known nonlinear device (33).

6. Method according to Claim 2, **characterized in that** the using (51) is a transposition of the intermodulation product (F1-F2) of the value corresponding to the specified frequency (F3).

7. Method according to any one of the preceding claims, **characterized in that** the synchronous detection circuits (17, 27, 35) are circuits having two quadrature paths.

8. Method according to one of the preceding claims, **characterized in that** the known nonlinear device consists of a threshold-based comparator followed by a binary multiplier (37, 40).

9. Method according to one of the preceding claims, **characterized in that** a rejecter filter (43, 46, 54) rejecting at the frequency of the signal to be measured by the synchronous detection circuit (27, 35) is wired at the input of the synchronous detection circuit (27, 35) so as to measure the continuous signal unrelated to the intermodulation component.

10. Estimator of nonlinearity of a device to be measured (11, 23, 62) comprising a generator of pilot signals (10, 19, 20, 65), the pilot signals passing through the device to be measured, comprising:

   - at least one means of extraction (14, 28, 29) which extracts the pilot signals from the output of the device to be measured,
   - a known nonlinear device (15, 30, 37, 40, 48) receiving these pilot signals originating from the extraction means (14, 28, 29) so as to generate known intermodulation products,
   - a synchronous detection circuit (17, 27, 35) linked to an output of the known nonlinear device (15, 30, 37, 40, 48) and providing signals relating to the amplitude and to the phase of an intermodulation product to be measured.

11. Estimator according to Claim 10, **characterized in that**:

   - the synchronous detection circuit (17, 27, 35) operates at a specified modulation frequency (F3),
   - the known nonlinear device (55, 57, 59) transposes a component of the intermodulation products to be measured to a frequency equal to that of the modulation signal (F3) of the synchronous detection circuit (17, 27, 35), the transposed signal being that transmitted to the input of the synchronous detection circuit and the transposition signal relating to the pilot signals and being of known characteristics.

12. Estimator according to Claim 11, **characterized in that** the transposition signal is produced from a second known nonlinear device (51) receiving the modulation signal (F3) of the synchronous detector (27, 35) and receiving a component of a known intermodulation product originating from a known nonlinear device (48) supplied with the pilot signals.

13. Estimator according to Claim 10, **characterized in that** a modulation signal of the synchronous detection circuit (17, 27, 35) is a component of the known intermodulation products.

ART ANTÉRIEUR

# FIG.1

EP 0 835 559 B1

FIG.2

FIG.3

EP 0 835 559 B1

FIG.4

EP 0 835 559 B1

FIG.5

ENTRÉE

22

23
DISPOSITIF
NON
LINÉAIRE

24
SORTIE
COUPLEUR

19
GÉNÉRATEUR
DE
PILOTE F1

21

20
GÉNÉRATEUR
DE
PILOTE F2

29
F2
37
F1+F2
38

39
F1-F2
41
2F1-F2

28
F1

40

35

2F1-F2
32

45

46

47

P1/2

DÉMODULATEUR I.Q

36
F1+F2

42

43

44

P1/2

DÉMODULATEUR I.Q
27

25

EP 0 835 559 B1

FIG.6

ENTRÉE

22

23 DISPOSITIF NON LINÉAIRE

24 SORTIE

COUPLEUR

19 GÉNÉRATEUR DE PILOTE F1

21

20 GÉNÉRATEUR DE PILOTE F2

29 F2

28 F1

48 (X)

49 F1-F2

51 (X)

50 OSCILLATEUR F3

F3

52 F1-F2-F3

35

32 2F1-F2

45

57

46

58 F1-F2

59 (X)

60 F3

(X) PI/2 (X)

I

Q

DÉMODULATEUR I.Q

26 F1-F2

53

54

55 (X)

56 F3

27

(X) PI/2 (X)

I

Q

DÉMODULATEUR I.Q

25

EP 0 835 559 B1

LASER

61

MODULATEUR
OPTIQUE

62

67

SORTIE MODULÉE

RÉCEPTEUR
OPTIQUE

68

GÉNÉRATION
DES PILOTES

65

66

ENTRÉE DE
MODULATION

DISPOSITIF DE
COMMANDE

63

DISPOSITIF
DE MESURE

64

FIG.7